(19) Europäisches Patentamt
European Patent Office
Office européen des brevets

(11) **EP 3 999 876 B1**

(12) **EUROPÄISCHE PATENTSCHRIFT**

(45) Veröffentlichungstag und Bekanntmachung des Hinweises auf die Patenterteilung:
**03.04.2024  Patentblatt 2024/14**

(21) Anmeldenummer: **20737405.9**

(22) Anmeldetag: **02.07.2020**

(51) Internationale Patentklassifikation (IPC):
**G01S 13/931** *(2020.01)*     **G01S 13/90** *(2006.01)*
**G01S 13/52** *(2006.01)*     **G01S 13/60** *(2006.01)*

(52) Gemeinsame Patentklassifikation (CPC):
**G01S 13/931; G01S 13/52; G01S 13/60;**
**G01S 13/90;** G01S 2013/9314; G01S 2013/93274

(86) Internationale Anmeldenummer:
**PCT/EP2020/068674**

(87) Internationale Veröffentlichungsnummer:
**WO 2021/008889 (21.01.2021 Gazette 2021/03)**

(54) **VERFAHREN UND VORRICHTUNG ZUM ERFASSEN EINES UMFELDES**

METHOD AND DEVICE FOR DETECTING AN ENVIRONMENT

PROCÉDÉ ET DISPOSITIF DE DÉTECTION D'UN ENVIRONNEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.07.2019  DE 102019210506**

(43) Veröffentlichungstag der Anmeldung:
**25.05.2022  Patentblatt 2022/21**

(73) Patentinhaber: **VOLKSWAGEN AKTIENGESELLSCHAFT**
**38440 Wolfsburg (DE)**

(72) Erfinder: **GISDER, Thomas**
**38446 Wolfsburg (DE)**

(56) Entgegenhaltungen:
DE-A1-102010 048 896     US-A1- 2010 321 235
US-A1- 2016 349 363

• GISDER THOMAS ET AL: "Synthetic Aperture Radar Towards Automotive Applications", 2019 20TH INTERNATIONAL RADAR SYMPOSIUM (IRS), GERMAN INSTITUTE OF NAVIGATION (DGON), 26. Juni 2019 (2019-06-26), Seiten 1-10, XP033578479, DOI: 10.23919/IRS.2019.8768173 [gefunden am 2019-07-19]

**Beschreibung**

Die Erfindung betrifft ein Verfahren und eine Vorrichtung zum Erfassen eines Umfeldes. Insbesondere betrifft die Erfindung ein Verfahren zum Erfassen eines Umfeldes, wobei ein Umfeld mittels mindestens eines bewegten Radarsensors erfasst wird, wobei zum Bereitstellen eines Umfeldabbildes auf Grundlage von erfassten Radardaten und Positionsinformationen des mindestens einen Radarsensors eine virtuelle Apertur des mindestens einen Radarsensors synthetisiert wird. Ferner betrifft die Erfindung ein Kraftfahrzeug.

Es ist bekannt, eine virtuelle Apertur eines Radarsensors zu synthetisieren. Das Prinzip des Synthetischen Apertur-Radars (engl. Synthetic Aperture Radar, SAR) basiert auf der Idee, die Wirkungsweise einer Antenne nachzubilden, die in Bezug auf Abmessungen größer ist als die real verwendete Antenne. Hierzu werden eine oder mehrere Antenne(n) eines Radarsensors sukzessive entlang einer virtuellen Geraden verschoben. An aufeinanderfolgenden Positionen werden hierbei jeweils Radardaten erfasst. Anschließend wird durch Überlagerung aus den an den unterschiedlichen Positionen erfassten Radardaten eine virtuelle Apertur synthetisiert und hierdurch ein Umfeldabbild erzeugt. Mittels eines solchen SARs kann ein laterales Auflösungsmögen erhöht werden.

Eine Anforderung beim Synthetisieren der virtuellen Apertur ist eine möglichst genaue Kenntnis der Positionen der Einzelmessungen, das heißt der Positionen, an denen die Radardaten jeweils erfasst wurden. Um die Positionen möglichst genau zu erfassen, werden im Bereich der Luft- und Raumfahrt hochgenaue Differential Global Positioning System-(DGPS)-Sensoren verwendet. Im automobilen Bereich könnten prinzipiell auch Inertiale Messeinheiten (engl. Intertial Measurement Units, IMUs) verwendet werden. Da IMUs mit den zugrunde liegenden Anforderungen, die das SAR stellt, jedoch zu kostenintensiv sind, werden stattdessen odometrische Verfahren verwendet, beispielsweise einfache Sensoren ("Wheel tick"-Sensoren), die eine Geschwindigkeit der Fahrzeugräder bestimmen. Die odometrischen Verfahren unterliegen hierbei jedoch den Nachteilen eines Schlupfverhaltens sowie anderen Einflussfaktoren, die zu Ungenauigkeiten führen können.

Insbesondere beim SAR-Rückprojektion-Algorithmus (Backprojection) wird jeder zeitlich aufeinanderfolgenden Radarmessung durch Interpolation eine örtliche Position zugeordnet. Diese Herangehensweise erfordert eine genaue Synchronisation zwischen dem Radarsensor und dem verwendeten Positionssensor. Kleine zeitliche Abweichungen bei dieser Synchronisation führen bereits zu einer fehlerhaften Projektion, sodass absolute Positionsangaben eines Objektes in einem aus den Radardaten erzeugten Umfeldabbild verfälscht werden. Weiterhin führt eine Über- oder Unterschätzung der Geschwindigkeit durch einen Bewegungssensor des Kraftfahrzeugs zu einer Stauchung oder Streckung des rückprojizierten Umfeldabbildes. Relevant ist dies insbesondere bei einer Vermessung von Parklücken, beispielsweise zum Betreiben eines Parkassistenten.

Aus der DE 10 2016 102 002 A1 sind Verfahren und Systeme zum Abschätzen einer Bewegung eines Fahrzeugs bekannt. Radardaten, welche ein oder mehrere stationäre Objekte in der Nähe des Fahrzeugs betreffen, werden über eine oder mehrere Radareinheiten des Fahrzeugs bezogen. Die Bewegung des Fahrzeugs wird unter Verwenden der Radardaten über einen Prozessor des Fahrzeugs abgeschätzt.

Aus der US 2019/0072668 A1 ist ein Erfassungssystem für ein Fahrzeug bekannt. Dieses umfasst mindestens einen Radarsensor, der am Fahrzeug angeordnet ist und ein Erfassungsfeld außerhalb des Fahrzeugs aufweist. Der Radarsensor enthält mehrere Sendeantennen und mehrere Empfangsantennen. Die Sendeantennen senden Signale und die Empfangsantennen empfangen die von Objekten reflektierten Signale. An einer Steuerung werden mehrere Abtastungen von Radardaten empfangen, die von dem Radarsensor erfasst werden, und an der Steuerung wird eine Fahrzeugbewegungsschätzung empfangen. Die auf empfangene Scans erfasster Radardaten reagierende Steuerung erfasst das Vorhandensein von Objekten innerhalb des Erfassungsbereichs des Radarsensors. Die Steuerung synthetisiert eine virtuelle Apertur und vergleicht in den Scans erfasste Objekte und bestimmt eine Trennung zwischen erfassten Objekten durch Verfolgen der erfassten Objekte über zwei oder mehr Scans.

Aus Gisder, Thomas et al., Synthetic aperture radar towards automotive applications, 20th International Radar Symposium IRS 2019, Juni 26-28, 2019, ISBN 978-3-7369-9860-5, DOI: 10.23919/IRS.2019.8768173, ist ein Verfahren zum Ausführen einer Synthese einer Synthetischen Apertur mittels einer radarbasierten Bewegungsschätzung bekannt.

Aus der US 2010 / 0 321 235 A1 ist ein bildgebendes Verfahren zum Abbilden oder Lokalisieren eines Objekts mit einem wellenbasierten Sensor bekannt. Von dem Objekt geht ein Wellenfeld als Objektsignal aus, wobei dieses von einem Sensor ausgehende Objektsignal an einer Sensorposition empfangen wird und wobei der oder die Sensoren und das Objekt mehrere räumliche Positionen zueinander einnehmen und eine synthetische Apertur bilden, und an jeder dieser Sensorpositionen ein Echosignal erfasst wird, aus den Echosignalen eine Anzahl von Funktionswerten extrahiert wird, die einer Raumkoordinate des Objekts zugeordnet sind, und ein Signal mit einem Restphasenverlauf gebildet wird aus den Funktionswerten. Anhand eines Restphasenverlaufs, der auf eine Abweichung realer Sensorpositionen von angenommenen oder gemessenen Sensorpositionen zurückzuführen ist, wird ein Bildpunkt, die Objektposition oder die Relativbewegung des Objekts bestimmt.

Aus der US 2016 / 0 349 363 A1 sind ein Radarabbildungssystem und eine Technik bekannt, bei denen ein Abbildungssystem ein Bild erzeugt und das Bild in Weltkoordinaten umwandelt, wobei die Position und der Kurs des Hosts berücksichtigt werden. Einmal in Weltkoordinaten können aufeinanderfolgende Radarbilder summiert (integriert, gemittelt) werden, um ein integriertes Bild mit einer Auflösung zu erzeugen, die im Vergleich zu einem ursprünglich erzeugten Bild verbessert ist.

Aus der DE 10 2010 048 896 A1 ist eine Vorrichtung zur Umfelderfassung eines Fahrzeugs bekannt, umfassend: eine Radareinrichtung mit einer Signalerzeugungseinrichtung zum Erzeugen eines Sendesignals, einer Sendeantenne zum Aussenden des Sendesignals, mindestens einer Empfangsantenne zum Empfangen eines aus dem reflektierten Sendesignal resultierenden Empfangssignals und einer Auswerteeinrichtung zum Auswerten von Echoprofilen des Empfangssignals und zum Ableiten von Belegungsaussagen für Raumbereiche einer Umgebung des Fahrzeugs, wobei die Signalerzeugungseinrichtung eine Modulationseinrichtung umfasst, die ein frequenzmoduliertes Dauerstrichsignal erzeugt, welches iterativ jeweils aus einer Mehrzahl n ineinander verschachtelter Frequenztreppen gebildet ist, wobei n eine natürliche Zahl größer oder gleich 3 ist, wobei die Auswerteeinrichtung ausgebildet ist, für jeden Iterationsschritt Messwerte des Empfangssignals Frequenzstufen der einzelnen Frequenztreppen und hierüber den Frequenztreppen zuzuordnen und für jede der n Frequenztreppen aus diesen jeweils zugeordneten Messwerten ein Echoprofil zu erzeugen, wobei jedes der n Echoprofile die Umfeldinformationen für einen von n verschiedenen Aperturpunkten einer synthetischen Apertur umfasst. Ferner ist ein entsprechendes Verfahren bekannt.

Der Erfindung liegt die Aufgabe zu Grunde, ein Verfahren und eine Vorrichtung zum Erfassen eines Umfeldes zu schaffen, bei denen das Bereitstellen von Positionsinformationen zum Synthetisieren der virtuellen Apertur verbessert ist.

Die Aufgabe wird erfindungsgemäß durch ein Verfahren mit den Merkmalen des Patentanspruchs 1 und eine Vorrichtung mit den Merkmalen des Patentanspruchs 4 gelöst. Ferner wird die Aufgabe durch ein Kraftfahrzeug mit den Merkmalen des Patentanspruchs 7 gelöst. Vorteilhafte Ausgestaltungen der Erfindung ergeben sich aus den Unteransprüchen.

Insbesondere wird ein Verfahren zum Erfassen eines Umfeldes zur Verfügung gestellt, wobei ein Umfeld mittels mindestens eines bewegten Radarsensors erfasst wird, wobei zum Bereitstellen eines Umfeldabbildes auf Grundlage von erfassten Radardaten und Positionsinformationen des mindestens einen Radarsensors eine virtuelle Apertur des mindestens einen Radarsensors synthetisiert wird, und wobei auf Grundlage der erfassten Radardaten des mindestens einen Radarsensors eine Relativgeschwindigkeit des mindestens einen Radarsensors bestimmt wird, wobei das Synthetisieren der virtuellen Apertur des mindestens einen Radarsensors auf Grundlage von aus der bestimmten Relativgeschwindigkeit bestimmten Positionsinformationen und mit den bestimmten Positionsinformationen jeweils korrespondierenden erfassten Radardaten erfolgt.

Ferner wird insbesondere eine Vorrichtung zum Erfassen eines Umfeldes geschaffen, umfassend mindestens einen Radarsensor zum Erfassen des Umfeldes, und eine Auswerteeinrichtung, wobei die Auswerteeinrichtung derart ausgebildet ist, zum Bereitstellen eines Umfeldabbildes auf Grundlage von während einer Bewegung des mindestens einen Radarsensors erfassten Radardaten und Positionsinformationen des mindestens einen Radarsensors eine virtuelle Apertur des mindestens einen Radarsensors zu synthetisieren, wobei die Auswerteeinrichtung ferner derart ausgebildet ist, auf Grundlage der erfassten Radardaten des mindestens einen Radarsensors eine Relativgeschwindigkeit des Radarsensors zu bestimmen und das Synthetisieren der virtuellen Apertur des mindestens einen Radarsensors auf Grundlage von aus der Relativgeschwindigkeit bestimmten Positionsinformationen und mit den bestimmten Positionsinformationen jeweils korrespondierenden erfassten Radardaten durchzuführen.

Das Verfahren und die Vorrichtung ermöglichen ein verbessertes Bereitstellen der zum Synthetisieren der virtuellen Apertur benötigten Positionsinformationen. Hierbei werden die erfassten Radardaten des mindestens einen Radarsensors sowohl zum Bestimmen einer Relativgeschwindigkeit des mindestens einen Radarsensors und darauf aufbauend zum Bestimmen von Positionsinformationen bzw. Positionen des mindestens einen Radarsensors als auch zum Bereitstellen eines Umfeldabbildes beim Synthetisieren der virtuellen Apertur verwendet. Da hierbei insbesondere dieselbe Zeitbasis verwendet wird, können die Positionsdaten direkt Erfassungszeitpunkten der erfassten Radardaten zugeordnet werden. Einfach ausgedrückt wird durch die Kenntnis einer Messposition sowie eines zugehörigen Messzeitpunkts in einem nachfolgenden Verfahrensschritt die zuvor zum Bestimmen der Position des Radarsensors verwendeten Radardaten beim Synthetisieren der virtuellen Apertur verwendet. Es kann hierdurch ein örtlich selbstkonsistentes Umfeldabbild erstellt und bereitgestellt werden.

Das Vorgehen ist hierbei beispielsweise das folgende: Aus den erfassten Radardaten wird zuerst eine Relativgeschwindigkeit eines Phasenzentrums des mindestens einen Radarsensors bestimmt. Auf Grundlage der bestimmten Relativgeschwindigkeit wird mittels zeitlicher Integration eine Wegstrecke des mindestens einen Radarsensors für ein Messintervall ermittelt. Die Wegstrecke setzt sich hierbei aus einzelnen Positionen zusammen, die jeweils eine Positionsinformation bilden. Den Positionsinformationen werden anschließend hiermit korrespondierende erfasste Radardaten zugeordnet. Auf Grundlage dieser Zuordnungen aus Positionsinformationen und Radardaten wird die virtuelle Apertur für den mindestens einen Radarsensor synthetisiert und hierdurch ein Umfeldabbild erstellt und bereitgestellt. Das erstellte Umfeldabbild kann beispielsweise in Form eines Datenpakets bereitgestellt werden.

Der Vorteil des Verfahrens und der Vorrichtung ist, dass zusätzliche Sensoren, beispielsweise eine Odometrie und/oder eine Intertiale Messeinheit nicht benötigt werden, um ein SAR auszubilden. Hierdurch können die Nachteile der Odometrie, wie ein Schlupfverhalten, und hohe Anschaffungskosten einer Inertialen Messeinheit vermieden werden.

Es ist vorgesehen, dass die Positionsinformationen derart bestimmt werden, dass die virtuelle Apertur des mindestens einen Radarsensors mit äquidistanten Stützstellen synthetisiert wird, wobei hierzu jeweils mit den äquidistanten Stützstellen zeitlich korrespondierende erfasste Radardaten verwendet werden. Hierbei ist insbesondere vorgesehen, dass das räumliche Abtasttheorem für Synthetische Apertur-Radare berücksichtigt wird. Dieses besagt, dass die Stützstellen zueinander einen Abstand aufweisen müssen, der einem Viertel der Wellenlänge der verwendeten Radarstrahlung bei der verwendeten Trägerfrequenz des Radarsensors entspricht. Bei einer Frequenz von 77 GHz, die einer Wellenlänge von ca. 4 Millimetern entspricht, müssen die Stützstellen daher zueinander einen Abstand von ca. 1 Millimeter aufweisen.

Es ist hierbei vorgesehen, dass die zeitlich mit den äquidistanten Stützstellen korrespondierenden erfassten Radardaten ausgehend von den bestimmten Positionsinformationen durch zeitliche Interpolation auf jeweilige Empfangszeitpunkte ausgewählt werden.

Die erfassten Radardaten sind insbesondere bereits ins Basisband abgemischte Empfangssignale in Form von Empfangsrohdaten bzw. Radarrohdaten eines Radarsensors. Die Empfangsrohdaten bzw. Radarrohdaten des Radarsensors umfassen insbesondere ein Spannungssignal des Radarsensors, das bereits analog-digital-gewandelt ist.

Die Positionsinformation umfasst insbesondere eine Position des mindestens einen Radarsensors, insbesondere eine Position eines Phasenzentrum des mindestens einen Radarsensors, in einem bekannten Koordinatensystem. Die Positionsinformation ist insbesondere dreidimensional und umfasst beispielsweise eine Position in einem zweidimensionalen kartesischen Koordinatensystem und einen Azimutwinkel, der eine Ausrichtung des mindestens einen Radarsensors beschreibt.

Die Relativgeschwindigkeit umfasst insbesondere zwei lineare Geschwindigkeitskomponenten und eine Rotations- bzw. Giergeschwindigkeit des mindestens einen Radarsensors. Die Relativgeschwindigkeit bezeichnet hierbei eine Geschwindigkeit relativ zu einem statischen Umfeld des mindestens einen Radarsensors.

Das Verfahren wird insbesondere für jedes Messintervall des mindestens einen Radarsensors durchgeführt.

Es kann vorgesehen sein, dass ein Radarsensor mehrere Sende- und/oder Empfangsantennen aufweist (z.B. MIMO). Die Positionsinformationen beziehen sich dann insbesondere jeweils auf Phasenzentren der einzelnen Empfangsantennen. Notwendig für eine SAR-Anwendung ist die Kenntnis der Position bzw. der Positionsinformationen zumindest einer Empfangsantenne. Als Radarsensor kann beispielsweise ein frequenzmodulierter Dauerstrichradar (FMCW-Radar) mit 77 GHz MIMO-Frontend verwendet werden. Zum Ausführen des Verfahrens kann auf den Rohdatenstrom zugegriffen werden, das heißt die erfassten Radardaten umfassen die ins Basisband abgemischten Rohdaten.

Es kann vorgesehen sein, dass mehrere Radarsensoren verwendet werden. Die Positionsinformationen beziehen sich bei mehreren Radarsensoren insbesondere auf die jeweiligen Phasenzentren der Radarsensoren bzw. bei mehreren Empfangsantennen auf die jeweiligen Phasenzentren dieser Empfangsantennen.

Werden mehrere Radarsensoren und/oder Empfangsantennen verwendet, so kann das Verfahren für jeden Radarsensor bzw. jede Empfangsantenne durchgeführt werden. Es ist dann möglich, für jeden Radarsensor bzw. jede der Empfangsantennen eine virtuelle Apertur zu synthetisieren. Anschließend kann durch Fusionieren ein fusioniertes Umfeldabbild des Umfeldes erzeugt und bereitgestellt werden.

Das Synthetisieren der virtuellen Apertur erfolgt insbesondere im Verfahren der Rückprojektion (Backprojection). Die hierfür nötigen Rechenoperationen werden beispielsweise mit Hilfe leistungsstarker Graphics Processing Units (GPUs) durchgeführt.

Teile der Vorrichtung, insbesondere die Auswerteeinrichtung, können einzeln oder zusammengefasst als eine Kombination von Hardware und Software ausgebildet sein, beispielsweise als Programmcode, der auf einem Mikrocontroller oder Mikroprozessor ausgeführt wird. Es kann jedoch auch vorgesehen sein, dass Teile einzeln oder zusammengefasst als anwendungsspezifische integrierte Schaltung (ASIC) ausgebildet sind.

Das Verfahren wird insbesondere mittels mindestens eines Radarsensors ausgeführt, der in einem Kraftfahrzeug angeordnet ist und einer Erfassung eines Umfelds des Kraftfahrzeugs dient.

Entsprechend wird insbesondere auch ein Kraftfahrzeug geschaffen, umfassend mindestens eine Vorrichtung nach einer beliebigen der beschriebenen Ausführungsformen.

In einer Ausführungsform ist vorgesehen, dass zum Bestimmen der Relativgeschwindigkeit ausschließlich statische Objekte im Umfeld ausgewählt und verwendet werden. Statische Objekte sind hierbei Objekte, die keine Eigenbewegung relativ zum Umfeld ausführen. Hierdurch kann die Relativgeschwindigkeit, das heißt eine Geschwindigkeit bzw. ein Geschwindigkeitsprofil einer Eigenbewegung, verbessert bestimmt werden. Es werden hierzu statische Objekte im Umfeld identifiziert, indem dynamische Objekte im Umfeld identifiziert und extrahiert werden, beispielsweise mittels des RANSAC-Algorithmus.

In einer Ausführungsform ist vorgesehen, dass die Relativgeschwindigkeit auf Grundlage einer von dem mindestens einen Radarsensor bereitgestellten Objektliste bestimmt wird, wobei die Objektliste jeweils eine Radialgeschwindigkeit, einen Messwinkel und eine radiale Entfernung von statischen Objekten im Umfeld in Bezug auf ein Phasenzentrum des mindestens einen Radarsensors umfasst. Moderne Radarsensoren liefern eine solche Objektliste mit im jeweiligen Umfeld erfassten Objekten. Das Verfahren kann hierdurch vereinfacht werden, da die Relativgeschwindigkeit des mindestens einen Radarsensors auf einfache Weise aus der jeweiligen Radialgeschwindigkeit unter Berücksichtigung des Messwinkels und der Entfernung bestimmt werden kann.

Merkmale zur Ausgestaltung der Vorrichtung ergeben sich aus der Beschreibung von Ausgestaltungen des Verfahrens. Die Vorteile der Vorrichtung sind hierbei jeweils die gleichen wie bei den Ausgestaltungen des Verfahrens.

Nachfolgend wird die Erfindung anhand bevorzugter Ausführungsbeispiele unter Bezugnahme auf die Figuren näher erläutert. Hierbei zeigen:

Fig. 1    eine schematische Darstellung einer Ausführungsform der Vorrichtung zum Erfassen eines Umfeldes;

Fig. 2    ein schematisches Flussdiagramm einer Ausführungsform des Verfahrens zum Erfassen eines Umfeldes;

Fig. 3    eine schematische Darstellung einer Zuordnung zwischen den erfassten Radardaten der einzelnen Radarsensoren und den jeweils bestimmten Positionsinformationen;

Fig. 4    eine schematische Darstellung von verwendeten Koordinatensystemen;

Fig. 5    schematische Darstellung einer zeitlichen Zuordnung von ins Basisband abgemischten analog/digital-gewandelten Rohdatenpaketen der erfassten Radardaten;

Fig. 6    eine schematische Darstellung zur Erläuterung des Bestimmens eines Erfassungszeitpunktes von Radardaten auf Grundlage von einer Position;

Fig. 7    eine schematische Darstellung zur Erläuterung des Bestimmens einer Relativgeschwindigkeit und einer Positionsinformation eines Radarsensors;

Fig. 8    eine weitere schematische Darstellung zur Erläuterung des Bestimmens der Relativgeschwindigkeit und der Positionsinformation des Radarsensors.

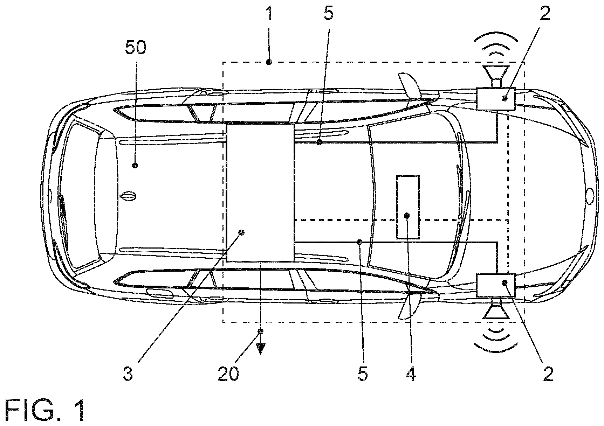

In Fig. 1 ist eine schematische Darstellung einer Ausführungsform der Vorrichtung 1 zum Erfassen eines Umfeldes gezeigt. Die Vorrichtung 1 ist in einem Kraftfahrzeug 50 angeordnet und dient dort beispielsweise einem Erfassen einer Parklücke. Die Vorrichtung 1 umfasst zwei Radarsensoren 2, welche mit Bezug auf das Kraftfahrzeug 50 jeweils seitlich ausgerichtet sind. Ferner umfasst die Vorrichtung 1 eine Auswerteeinrichtung 3 und einen Zeitgeber 4, über den die Radarsensoren 2 und die Auswerteeinrichtung 3 auf eine gemeinsame Zeitbasis synchronisiert werden.

Die Auswerteeinrichtung 3 kann einzeln oder zusammengefasst mit anderen Komponenten des Kraftfahrzeugs 50 als eine Kombination von Hardware und Software ausgebildet sein, beispielsweise als Programmcode, der auf einem Mikrocontroller oder Mikroprozessor ausgeführt wird. Die Auswerteeinrichtung 3 kann beispielsweise eine oder mehrere Graphics Processing Unit(s) (GPUs) umfassen.

Die Auswerteeinrichtung 3 bestimmt auf Grundlage von erfassten Radardaten 5 der Radarsensoren 2 eine Relativgeschwindigkeit der Radarsensoren 2. Anschließend synthetisiert die Auswerteeinrichtung 3 zum Bereitstellen eines Umfeldabbildes 20 jeweils eine virtuelle Apertur der Radarsensoren 2 auf Grundlage von aus der Relativgeschwindigkeit bestimmten Positionsinformationen und mit den bestimmten Positionsinformationen jeweils korrespondierenden erfassten Radardaten 5.

Das mit der synthetisierten virtuellen Apertur erzeugte Umfeldabbild 20 wird anschließend ausgegeben, beispielsweise als Datenpaket, das eine Projektion eines Radarentfernungsprofiles in eine Bildebene umfasst.

In der in der Fig. 1 gezeigten Ausführungsform sind zwei Radarsensoren 2 gezeigt. Prinzipiell kann die Vorrichtung 1 auch nur einen Radarsensor 2 umfassen und das Verfahren kann entsprechend mit nur einem Radarsensor 2 durchgeführt werden.

Es kann vorgesehen sein, dass zum Bestimmen der Relativgeschwindigkeit ausschließlich statische Objekte im Umfeld ausgewählt und verwendet werden.

Weiterbildend kann vorgesehen sein, dass die Relativgeschwindigkeit auf Grundlage einer von den Radarsensoren 2 bereitgestellten Objektliste bestimmt wird, wobei die Objektliste jeweils eine Radialgeschwindigkeit, einen Messwinkel und eine radiale Entfernung von statischen Objekten im Umfeld in Bezug auf ein Phasenzentrum des jeweiligen Radarsensors 2 umfasst.

Es ist vorgesehen, dass die Positionsinformationen derart bestimmt werden, dass die virtuelle Apertur der Radarsensoren 2 mit äquidistanten Stützstellen synthetisiert wird, wobei hierzu jeweils mit den äquidistanten Stützstellen zeitlich korrespondierende erfasste Radardaten 5 verwendet werden.

Ferner ist vorgesehen, dass die zeitlich mit den äquidistanten Stützstellen korrespondierenden erfassten Radardaten 5 ausgehend von den bestimmten Positionsinformationen durch zeitliche Interpolation auf jeweilige Empfangszeitpunkte der Radardaten ausgewählt werden.

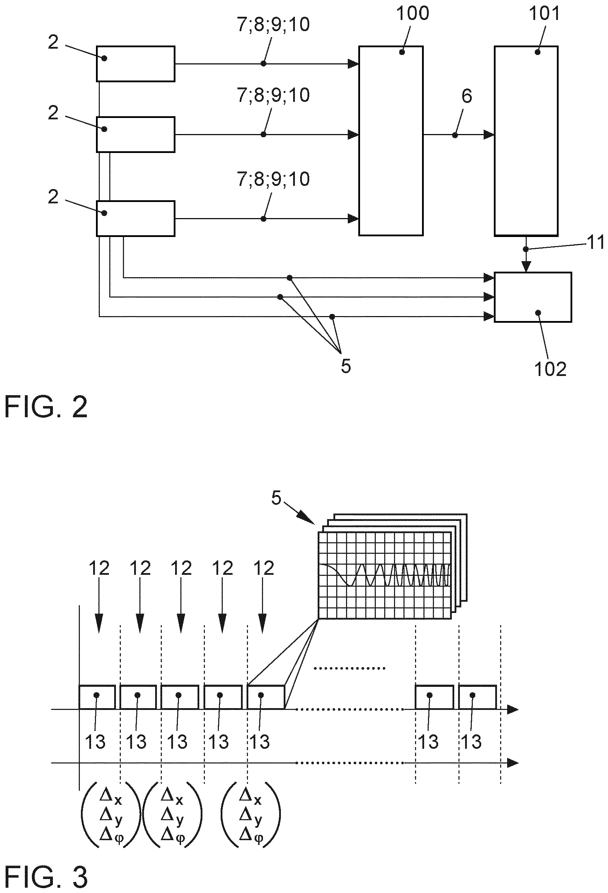

In Fig. 2 ist eine schematisches Flussdiagramm einer Ausführungsform des Verfahrens zum Erfassen eines Umfeldes gezeigt. Hierbei wird in der gezeigten Ausführungsform die Relativgeschwindigkeit 6 auf Grundlage von Objektlisten 7 bestimmt, welche von Radarsensoren 2 bereitgestellt werden. Die Objektlisten 7 umfassen jeweils eine Radialgeschwindigkeit 8, einen Messwinkel 9 und eine radiale Entfernung 10 von statischen Objekten im Umfeld in Bezug auf ein Phasenzentrum der Radarsensoren 2.

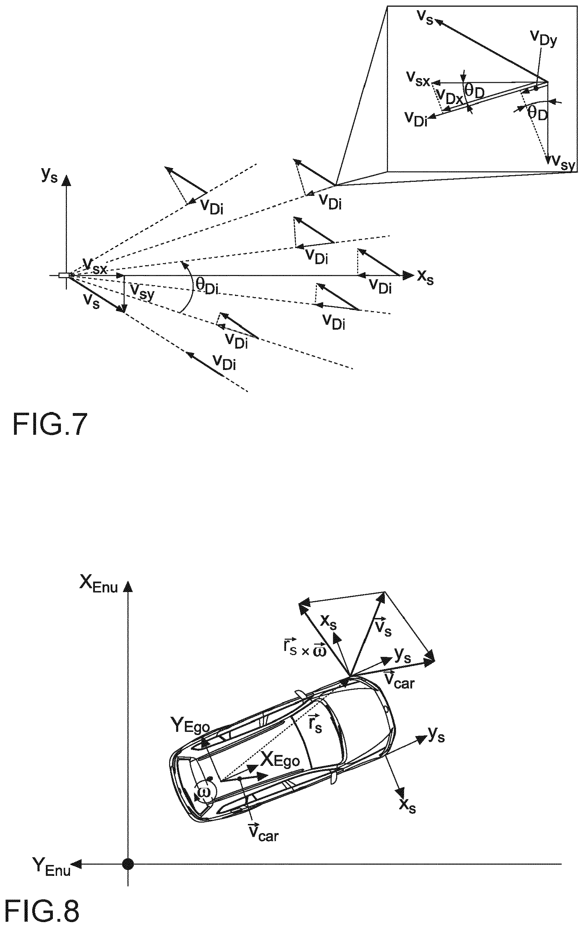

Auf Grundlage der Objektlisten 7 wird in einem Verfahrensschritt 100 die Relativgeschwindigkeit 6 der Radarsensoren 2 bestimmt (vgl. Fig. 7 und Fig. 8). Es wird hierbei davon ausgegangen, dass die Radarsensoren 2 alle ortsfest und ausrichtungsfest, das heißt starr, an einem Kraftfahrzeug angeordnet sind.

In einem Verfahrensschritt 101 werden aus der bestimmten Relativgeschwindigkeit 6 Positionsinformationen 11 bestimmt.

In einem Verfahrensschritt 102 wird eine Zuordnung zwischen den erfassten Radardaten 5 der einzelnen Radarsensoren 2 und den jeweils bestimmten Positionsinformationen 11 durchgeführt.

Diese Zuordnung ist schematisch in der Fig. 3 gezeigt. Gezeigt sind hierbei in Messzyklen 12 aufgeteilte erfasste Radardaten 5, wobei die erfassten Radardaten 5 als Rohdatenpakete 13 zusammengefasst sind und in Abfrageintervallen 12 von den Radarsensoren bereitgestellt werden. Die Rohdatenpakete 13 umfassen beispielsweise jeweils 256 Einzelmessungen, das heißt Empfangssignale, mehrerer Radarsensoren mit jeweils mehreren Antennen. Jedem dieser Rohdatenpakete 13 wird beispielsweise am Anfang eine Positionsinformation, das heißt eine mit diesem Zeitpunkt korrespondierende Position in einem Referenzkoordinatensystem zugeordnet, welche für das jeweilige Abfrageintervall 12 durch Integration aus der bestimmten Relativgeschwindigkeit abgeleitet wurde.

Dies erfolgt insbesondere, indem die Positionsinformationen 11 derart bestimmt werden, dass die virtuelle Aperturen der Radarsensoren 2 mit äquidistanten Stützstellen synthetisiert werden, wobei hierzu jeweils mit den äquidistanten Stützstellen zeitlich korrespondierende erfasste Radardaten 5 verwendet werden. Die Anzahl der Stützstellen bzw. deren Abstand zueinander orientiert sich hierbei an dem räumlichen Abtasttheorem für Synthetische Apertur-Radare.

Es ist vorgesehen, dass die zeitlich mit den äquidistanten Stützstellen korrespondierenden erfassten Radardaten 5 ausgehend von den bestimmten Positionsinformationen 11 durch zeitliche Interpolation auf jeweilige Empfangszeitpunkte ausgewählt werden. Anders ausgedrückt werden die mit den äquidistanten Stützstellen korrespondierenden Positionsinformationen 11 dazu verwendet, die hiermit zeitlich korrespondierenden erfassten Radardaten 5 zu identifizieren und auf die entsprechenden Zeitpunkte zu interpolieren.

Das über die virtuelle Apertur erzeugte Umfeldabbild wird anschließend ausgegeben, beispielswiese als Datenpaket.

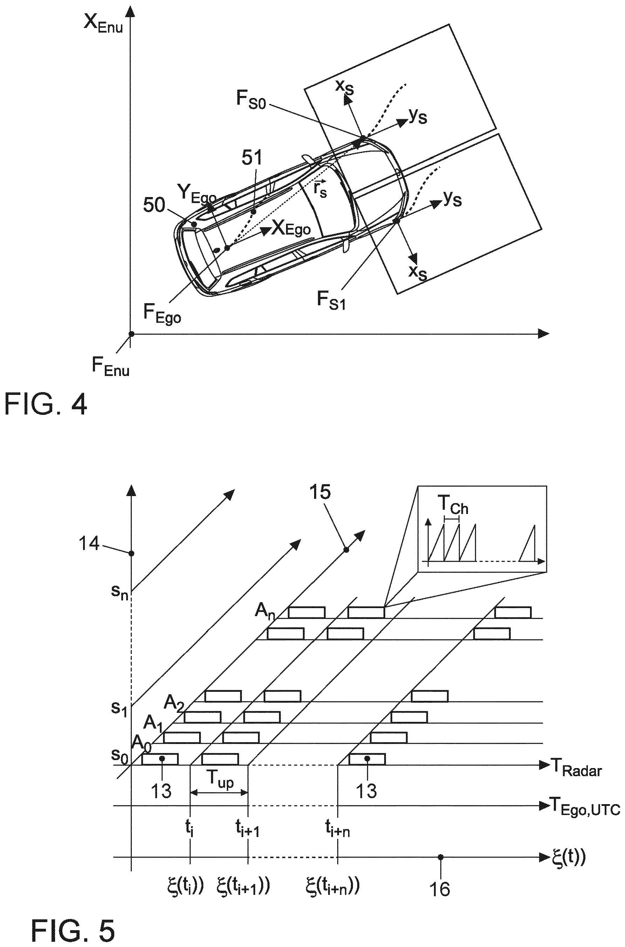

In den nachfolgenden Figuren 4 bis 6 wird das Verfahren an einem Ausführungsbeispiel detaillierter erläutert.

In Fig. 4 ist eine schematische Darstellung von verwendeten Koordinatensystemen $F_{Enu}$, $F_{Ego}$, $F_{Si}$ zur Erläuterung der Erfindung gezeigt. $F_{Enu}$ bezeichnet hierbei ein Referenzkoordinatensystem zur Angabe einer Fahrzeugtrajektorie 51. $F_{Ego}$ ist ein Koordinatensystem zur Angabe einer Einbauposition im Kraftfahrzeug 50, dessen Ursprung beispielsweise in der Mitte einer Hinterachse des Kraftfahrzeugs 50 liegt. $F_{Si}$ ist ein SAR-Koordinatensystem zum Abbilden eines Messumfeldes des jeweiligen Sensors i (i = 0, 1). Die Koordinatensysteme $F_{Enu}$, $F_{Ego}$, $F_{Si}$ weisen jeweils x- und y-Koordinaten auf, welche mit den zugehörigen Indices markiert sind.

In Fig. 5 ist eine schematische Darstellung einer zeitlichen Zuordnung von ins Basisband abgemischten analog/digital-gewandelten Rohdatenpaketen 13 der erfassten Radardaten gezeigt. Der Übersichtlichkeit halber sind nicht alle Rohdatenpakete 13 mit einem Bezugszeichen versehen. Die Darstellung umfasst drei Achsen 14, 15, 16. Die Achse 14 gibt den Radarsensor an, der das Rohdatenpaket 13 bereitstellt, wobei der Radarsensor mit dem Index $s_i$ bezeichnet wird. Die Achse 15 gibt die jeweilige (räumlich getrennte) Antenne des Radarsensors an, die das Rohdatenpaket 13 liefert, wobei die Antenne mit dem Index $A_i$ bezeichnet wird. Die Achse 16 gibt eine Eigenzeit $T_{Radar}$ eines jeweils betrachteten Radarsensors, eine Fahrzeugzeit $T_{Ego, UTC}$ eines universellen Zeitgebers der Vorrichtung (vgl. Fig. 1) und eine Positionsinformation $\xi(t)$ an. Die Eigenzeit $T_{Radar}$ und die Fahrzeugzeit $T_{Ego, UTC}$ sind miteinander synchronisiert.

Jedes Rohdatenpaket 13 umfasst z.B. 256 Einzelmessungen, was schematisch in einem Inset 17 der Fig. 5 über die einzelnen Frequenzrampen angedeutet ist. Eine Einzelmessung benötigt hierbei eine Erfassungszeit $T_{Ch}$.

In der Fig. 5 sind Empfangszeitpunkte $t_i$ gezeigt, zu denen die einzelnen Rohdatenpakete 13 jeweils von der Auswerteeinrichtung 3 (vgl. Fig. 1) empfangen wurden. Jede Antenne $A_i$ eines Radarsensors $S_i$ empfängt eine Sequenz aus M frequenzmodulierten Empfangssignalen, das heißt Reflexionen von Sendesignalen des Radarsensors, innerhalb eines Abfrageintervalls bzw. Update-Intervalls $T_{up}$. Die Dauer eines Updates wird mit der Erfassungszeit $T_{ch}$ für eine Einzelmessung und einer Latenzzeit $T_{latenz}$, welche die Laufzeiten der Signale berücksichtigt, gemäß der nachfolgenden Formel bestimmt:

$$T_{up} = T_{ch} * M + T_{latenz}$$

Basierend auf den Rohdatenströmen der N Radarsensoren wird eine Relativgeschwindigkeit, das heißt eine aktuelle lineare Geschwindigkeit des Kraftfahrzeuges sowie eine Änderungsrate eines Gierwinkels berechnet ($v_x$ $v_y$ $\omega$). Durch zeitliche Integration der Relativgeschwindigkeit wird eine aktuelle Fahrzeugposition aus linearen Koordinaten und einem Gierwinkel ($x(t_i)$ $y(t_i)$ $\varphi(t_i)$) zum Zeitpunkt $t_i$ im Koordinatensystem $F_{Enu}$ bestimmt. Gemäß der nachfolgenden Formel wird eine Wegdifferenz $\Delta s$ zu einer vorausgegangenen Fahrzeugposition berechnet:

$$\Delta s_i = \| (x, y)^{t_i} - (x, y)^{t_{i-1}} \|$$

Die Berechnung der Länge einer virtuellen Apertur ergibt sich durch Addition der Wegdifferenzen:

$$\xi_i = \sum_i \Delta s_i$$

Das Erstellen der virtuellen Apertur für jeden Radarsensor bzw. jede Antenne erfordert eine genaue Kenntnis einer räumlichen Position eines jeweiligen Phasenzentrums sowie einen Zeitpunkt, zu dem die jeweils zugehörigen Radardaten erfasst wurden. Die Abstände von Stützstellen der zum Erzeugen der virtuellen Apertur verwendeten erfassten Radardaten unterliegen weiterhin dem räumlichen Abtasttheorem für Synthetische Apertur-Radare, das heißt es ist gefordert, dass

$$\Delta s_{sp} = \frac{\lambda}{4}$$

wobei $\lambda$ eine Wellenlänge der verwendeten Radarstrahlung ist.

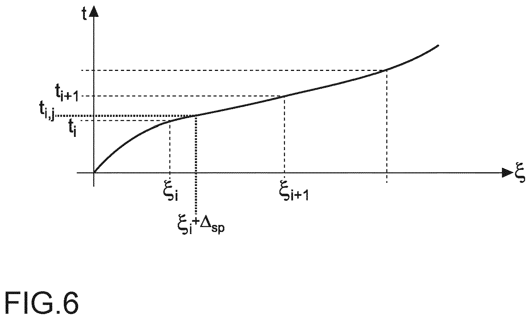

Da die erfassten Radardaten sowohl zum Bestimmen der Positionsinformationen als auch zum Erzeugen der virtuellen Apertur verwendet werden, und daher eine gemeinsame Zeitbasis vorhanden ist, können ein mit einer Positionsinformation korrespondierender Zeitpunkt und darauf aufbauend korrespondierende erfasste Radardaten durch zeitliche Interpolation ermittelt werden. Gesuchte erfasste Radardaten werden bei Kenntnis eines Erfassungszeitpunktes $t_{i,j}$ am Wegabschnitt $\xi_i + \Delta sp$ aus dem ins Basisband abgemischten Rohdatenpaket 13 ermittelt. Dies ist schematisch in der Fig. 6 dargestellt. Der Erfassungszeitpunkt $t_{i,j}$ wird hierbei wie folgt ermittelt:

$$\frac{t_{i+1} - t_i}{\xi_{i+1} - \xi_i} = \frac{t_{i,j} - t_i}{\xi_i + k * \Delta_{sp} - \xi_i}$$

$$t_{i,j} = \frac{T_{up}}{\xi_{i+1} - \xi_i} (k * \Delta_{sp}) + t_i$$

$t_{i,j}$ definiert hierbei den Erfassungszeitpunkt (Messzeitpunkt), an dem gemäß dem Abtasttheorem eine Radarmessung interpoliert werden soll. Der Index "j" ist hierbei lediglich eine Kennzeichnung für diesen Zeitpunkt und hat hinsichtlich einer Indizierung ansonsten keine Bedeutung.

Anders ausgedrückt werden ausgehend von dem räumlichen Abtasttheorem für Synthetische Apertur-Radare Positionsinformationen vorgegeben, das heißt Positionen für äquidistante Stützstellen ausgewählt. Mittels der vorgegebenen Positionen werden anschließend über zeitliche Interpolation die zugehörigen Erfassungszeitpunkte ermittelt. Für die zugehörigen Erfassungszeitpunkte werden sodann die zugehörigen Radardaten aus dem jeweiligen Rohdatenpaket 13 (vgl. Fig. 5) extrahiert. Zum Schluss wird die virtuelle Apertur über eine Rückprojektion synthetisiert und hierüber ein Umfeldabbild erzeugt.

Eine Anzahl an Positionen für die virtuelle Apertur und hiermit eine Anzahl zu extrahierender Erfassungszeitpunkte zu erfassten Radardaten bzw. Empfangssignalen variiert bei jedem Rohdatenpaket 13 aufgrund einer aktuellen Relativgeschwindigkeit, das heißt je schneller das Kraftfahrzeug sich bewegt, desto mehr Positionen werden im gleichen Zeitintervall abgefahren. Die Anzahl N an Positionen kann wie folgt berechnet werden:

$$N = \left\lfloor \frac{t_{i+1}(\xi_{i+1}) - t_i(\xi_i)}{\Delta_{sp}} \right\rfloor$$

Die Funktion $t_i(\xi)$ definiert hierbei einen Beginn und ein Ende der Teilstrecke.

Die Figuren 7 und 8 zeigen schematische Darstellungen zur Erläuterung des Bestimmens einer Relativgeschwindigkeit und einer Positionsinformation eines Radarsensors zur Verdeutlichung der Erfindung.

In Fig. 7 ist eine schematische Darstellung einer Projektion eines Geschwindigkeitsvektors $v_s$ eines an einem Kraftfahrzeug angeordneten Radarsensors auf den radial unter dem Erfassungswinkel $\theta_{Di}$ erfassten Doppler-Geschwindigkeitsvektor $v_{Di}$ stationärer Reflexpunkte an im Koordinatensystem des Radarsensors gezeigt.

Zum Bestimmen der Relativgeschwindigkeit und der Positionsinformationen werden basierend auf einem Range-, Doppler- und Azimutspektrum des ins Basisband abgemischten Empfangssignals eine Entfernung, eine Relativgeschwindigkeit und ein Azimutwinkel von statischen Objekten innerhalb eines Erfassungsbereichs des Radarsensors bestimmt.

Hierbei wird das folgende Signalmodell im Basisband verwendet:

$$s_B(t, l, b) = \exp(j2\pi(\underbrace{f_c \frac{2}{c_0} v_D}_{f_D}\left(t + l * T_{chirp}\right) + \underbrace{\frac{B}{T_{chirp}} \frac{2}{c_0} R_0}_{f_\tau} t + \underbrace{\frac{d}{\lambda} \sin(\theta)}_{f_\varphi} b +$$

$$\underbrace{f_c \frac{2}{c_0} R_0}_{\phi_0}))$$

Range:

$$S_B(n, l, b) = \sum_{k=0}^{K-1} s_B(k, l, b) \exp(-j2\pi \frac{kn}{K})$$

Doppler:

$$S_B(n, m, b) = \sum_{l=0}^{L-1} S_B(n, l, b) \exp(-j2\pi \frac{lm}{L})$$

Azimut:

$$S_B(n, m, o) = \sum_{p=0}^{P-1} S_B(n, m, o) \exp(-j2\pi \frac{po}{P})$$

Die Formeln beschreiben die Fourier-Transformation zum Erhalt des Range-, Doppler- und Azimutwinkel-Spektrums. Die verwendeten Variablen haben hierbei insbesondere die folgenden Bedeutungen:

t - Zeitindex, für eine zeitdiskrete Repräsentation eines zeitkontinuierlichen Signals;
l - Rampenindex (Indizierung insbesondere von Rapid-Chirps);
b - indiziert die Empfangsantennen auf einer realen Apertur des Radarsensors;
$f_c$ - Trägerfrequenz des Radarsignals;
$c_0$ - Lichtgeschwindigkeit;
$v_D$ - Dopplergeschwindigkeit;
$T_{chirp}$ - Sendedauer eines Rapid-Chirps;
B - Bandbreite der Frequenzmodulation eines Rapid-Chirps;
d - Abstand der Antennenelemente auf der realen Apertur des Radarsensors;
$\lambda$ - Wellenlänge der Trägerfrequenz $f_c$;

θ - Einfallswinkel eines Signals vom Zielobjekt;

$R_0$ - Entfernung zum Zielobjekt;

$f_D$ - Frequenz durch Dopplergeschwindigkeit eines Zielobjektes;

$f_\tau$ - Frequenz durch Entfernung zum Zielobjekt;

$f_\varphi$ - Frequenz durch Einfallswinkel zum Zielobjekt;

$\phi_0$ - Phasenterm

$s_B(t,l,b)$ - Empfangssignal;

$S_B(n,l,b)$ - Entfernungsspektrum zur Bestimmung der Zielentfernung;

n - Index für Entfernungsfrequenz-Bin im Spektrum;

$S_B(n,m,b)$ - Geschwindigkeitsspektrum zur Bestimmung der Zielgeschwindigkeit;

m - Index für Geschwindigkeitsfrequenz-Bin im Spektrum;

$S_B(n,m,o)$ - Winkelspektrum zur Bestimmung des Zielwinkels;

o - Index für Winkelfrequenz-Bin im Spektrum.

Für das Bestimmen einer Position des Kraftfahrzeugs werden pro Abfrageintervall bzw. Updateintervall $T_{up}$, das heißt pro Rohdatenpaket, die folgenden Schritte durchgeführt:

(1) Berechnen von Range-, Doppler- und Azimutspektrum für jeden Radarsensor,

(2) Identifizieren von Radialgeschwindigkeiten und Azimutwinkeln möglicher Ziele (vgl. Fig. 7);

(3) Extrahieren von dynamischen Objekten durch Anwendung des RANSAC-Algorithmus, sodass nur statische Objekte betrachtet werden;

(4) Bestimmen der Relativgeschwindigkeit des Radarsensors gemäß der nachfolgenden Gleichung:

$$\underbrace{\begin{bmatrix} -v_{D1} \\ \vdots \\ -v_{Dn} \end{bmatrix}}_{V_D} = \underbrace{\begin{bmatrix} \cos(\theta_{D1}) & \sin(\theta_{D1}) \\ \vdots & \vdots \\ \cos(\theta_{Dn}) & \sin(\theta_{Dn}) \end{bmatrix}}_{M} \underbrace{\begin{bmatrix} v_{Sx} \\ v_{Sy} \end{bmatrix}}_{V_S}$$

(5) Erweitern dieser Gleichung um das vorgenannte Systemmodell zum Berechnen einer Lineargeschwindigkeit ($v_{sx}$, $v_{sy}$) und Giergeschwindigkeit ω des als Starrkörpermodells approximierten Kraftfahrzeugs gemäß folgender Gleichung:

$$\underbrace{\begin{bmatrix} \omega \\ v_{Sx} \\ v_{Sy} \end{bmatrix}}_{v_S} = \underbrace{\begin{bmatrix} 1 & 0 & 0 \\ -y_S & 1 & 0 \\ x_S & 0 & 1 \end{bmatrix}}_{B} \underbrace{\begin{bmatrix} \omega \\ v_{car,x} \\ v_{car,y} \end{bmatrix}}_{v_{car}} ; \qquad V_D = \underbrace{\begin{bmatrix} M_{S1,1}\,{}^{s_1}R_{Ego}B_{S1} \\ \vdots \\ M_{S1,n}\,{}^{s_1}R_{Ego}B_{S1} \\ M_{S2,1}\,{}^{s_2}R_{Ego}B_{S2} \\ \vdots \\ M_{S2,n}\,{}^{s_1}R_{Ego}B_{S2} \end{bmatrix}}_{N} [v_{car}]$$

B bezeichnet hierbei eine Matrix zur Definition einer Verbauposition eines betrachteten Radarsensors relativ zur Hinterachse eines Kraftfahrzeugs (vgl. Fig. 8). Die Indices S1 und S2 bezeichnen den jeweils betrachteten Radarsensor.

R bezeichnet eine Rotationsmatrix zur Rotation der seitlich im Kraftfahrzeug verbauten Radarsensoren.

(6) Berechnen der aktuellen Kraftfahrzeugposition gemäß der folgenden Gleichung:

$$\begin{bmatrix} \varphi_{car} \\ x_{car} \\ y_{car} \end{bmatrix} = \begin{bmatrix} \omega \\ v_{car,x} \\ v_{car,y} \end{bmatrix} * T_{up}$$

Ausgehend von der Kraftfahrzeugposition kann anschließend für jeden Radarsensor die Positionsinformation bestimmt und für das Erstellen der virtuellen Apertur bereitgestellt werden.

**Bezugszeichenliste**

| | |
|---|---|
| 1 | Vorrichtung |
| 2 | Radarsensor |
| 3 | Auswerteeinrichtung |
| 4 | Zeitgeber |
| 5 | Radardaten |
| 6 | Relativgeschwindigkeit |
| 7 | Objektliste |
| 8 | Radialgeschwindigkeit |
| 9 | Messwinkel |
| 10 | Entfernung |
| 11 | Positionsinformation |
| 12 | Messzyklus |
| 13 | Rohdatenpakete |
| 14 | Achse (Radarsensoren) |
| 15 | Achse (Antennen) |
| 16 | Achse (Eigenzeit, Fahrzeugzeit, Positionsinformation) |
| 20 | Umfeldabbild |
| 50 | Kraftfahrzeug |
| 100-102 | Verfahrensschritte |
| $F_{Enu}$ | Koordinatensystem (Referenz) |
| $F_{Ego}$, | Koordinatensystem (Kraftfahrzeug) |
| $F_{Si}$ | Koordinatensystem (Radarsensor i) |
| $t_i$ | Zeitpunkt |
| $T_{up}$ | Updateintervall (Abfrageintervall) |
| $T_{ch}$ | Erfassungdauer (Einzelmessung) |
| $T_{latenz}$ | Signallaufzeit |
| $x(t_i)$, $y(t_i)$ | Position (Kraftfahrzeug) |
| $\varphi(t_i)$ | Gierwinkel (Kraftfahrzeug) |
| $v_x$, $v_y$ | (Linear-)Geschwindigkeit (Kraftfahrzeug) |
| $\omega$ | Änderungsrate des Gierwinkels (Kraftfahrzeug) |
| $\xi_i$ | Position (Positionsinformation) |
| $\Delta s$ | Wegdifferenz |
| $N$ | Anzahl Positionen |
| $v_s$ | Geschwindigkeitsvektor Radarsensor |
| $\theta_{Di}$ | Erfassungswinkel |
| $v_{Di}$ | Doppler-Geschwindigkeitsvektor |
| $S_i$ | Radarsensor mit Index i |
| $A_i$ | Antenne mit Index i |

**Patentansprüche**

**1.** Verfahren zum Erfassen eines Umfeldes, wobei ein Umfeld mittels mindestens eines bewegten Radarsensors (2) erfasst wird, wobei zum Bereitstellen eines Umfeldabbildes (20) auf Grundlage von erfassten Radardaten (5) und Positionsinformationen (11) des mindestens einen Radarsensors (2) eine virtuelle Apertur des mindestens einen Radarsensors (2) synthetisiert wird,

wobei auf Grundlage der erfassten Radardaten (5) des mindestens einen Radarsensors (2) eine Relativgeschwindigkeit (6) des mindestens einen Radarsensors (2) bestimmt wird, wobei das Synthetisieren der virtuellen Apertur des mindestens einen Radarsensors (2) auf Grundlage von aus der bestimmten Relativgeschwindigkeit (6) bestimmten Positionsinformationen (11) und mit den bestimmten Positionsinformationen (11) jeweils korrespondierenden erfassten Radardaten (5) erfolgt, wobei die Positionsinformationen (11) derart bestimmt werden, dass die virtuelle Apertur des mindestens einen Radarsensors (2) mit äquidistanten Stützstellen synthetisiert wird, **dadurch gekennzeichnet, dass** hierzu jeweils mit den äquidistanten Stützstellen zeitlich korrespondierende erfasste Radardaten (5) verwendet werden, wobei die zeitlich mit den äquidistanten Stützstellen korrespondierenden erfassten Radardaten (5) ausgehend von den bestimmten Positionsinformationen (11) durch zeitliche Interpolation auf jeweilige Empfangszeitpunkte ($t_i$) ausgewählt werden.

2. Verfahren nach Anspruch 1, wobei zum Bestimmen der Relativgeschwindigkeit (6) ausschließlich statische Objekte im Umfeld ausgewählt und verwendet werden.

3. Verfahren nach Anspruch 2, wobei die Relativgeschwindigkeit (6) auf Grundlage einer von dem mindestens einen Radarsensor (2) bereitgestellten Objektliste (7) bestimmt wird, wobei die Objektliste (7) jeweils eine Radialgeschwindigkeit (8), einen Messwinkel (9) und eine radiale Entfernung (10) von statischen Objekten im Umfeld in Bezug auf ein Phasenzentrum des mindestens einen Radarsensors (2) umfasst.

4. Vorrichtung (1) zum Erfassen eines Umfeldes, umfassend:

   mindestens einen Radarsensor (2) zum Erfassen des Umfeldes, und
   eine Auswerteeinrichtung (3), wobei die Auswerteeinrichtung (3) derart ausgebildet ist, zum Bereitstellen eines Umfeldabbildes (20) auf Grundlage von während einer Bewegung des mindestens einen Radarsensors (2) erfassten Radardaten (5) und
   Positionsinformationen (11) des mindestens einen Radarsensors (2) eine virtuelle Apertur des mindestens einen Radarsensors (2) zu synthetisieren,
   wobei die Auswerteeinrichtung (3) ferner derart ausgebildet ist, auf Grundlage der erfassten Radardaten (5) des mindestens einen Radarsensors (2) eine Relativgeschwindigkeit (6) des Radarsensors (2) zu bestimmen und das Synthetisieren der virtuellen Apertur des mindestens einen Radarsensors (2) auf Grundlage von aus der Relativgeschwindigkeit (6) bestimmten Positionsinformationen (11) und mit den bestimmten Positionsinformationen (11) jeweils korrespondierenden erfassten Radardaten (5) durchzuführen,
   wobei
   die Auswerteeinrichtung (3) ferner derart ausgebildet ist, die Positionsinformationen (11) derart zu bestimmen, dass die virtuelle Apertur des mindestens einen Radarsensors (2) mit äquidistanten Stützstellen synthetisiert wird, **dadurch gekennzeichnet, dass** die Auswerteeinrichtung (3) ausgebildet ist hierzu jeweils mit den äquidistanten Stützstellen zeitlich korrespondierende erfasste Radardaten (5) auszuwählen, und die zeitlich mit den äquidistanten Stützstellen korrespondierenden erfassten Radardaten (5) ausgehend von den bestimmten Positionsinformationen (11) durch zeitliche Interpolation auf jeweilige Empfangszeitpunkte ($t_i$) auszuwählen.

5. Vorrichtung (1) nach Anspruch 4, wobei die Auswerteeinrichtung (3) ferner derart ausgebildet ist, zum Bestimmen der Relativgeschwindigkeit (6) ausschließlich statische Objekte im Umfeld auszuwählen und zu verwenden.

6. Vorrichtung (1) nach Anspruch 5, wobei die Auswerteeinrichtung (3) ferner derart ausgebildet ist, die Relativgeschwindigkeit (6) auf Grundlage einer von dem mindestens einen Radarsensor (2) bereitgestellten Objektliste (7) zu bestimmen, wobei die Objektliste (7) jeweils eine Radialgeschwindigkeit (8), einen Messwinkel (9) und eine radiale Entfernung (10) von statischen Objekten im Umfeld in Bezug auf ein Phasenzentrum des mindestens einen Radarsensors (2) umfasst.

7. Kraftfahrzeug (50), umfassend mindestens eine Vorrichtung (1) nach einem beliebigen der Ansprüche 4 bis 6.

**Claims**

1. Method for detecting an environment, wherein an environment is detected by means of at least one moving radar sensor (2), wherein a virtual aperture of the at least one radar sensor (2) is synthesized for providing an image of the environment (20) on the basis of detected radar data (5) and position information (11) of the at least one radar sensor (2), wherein a relative speed (6) of the at least one radar sensor (2) is determined on the basis of the detected radar data (5) of the at least one radar sensor (2), wherein the synthesizing of the virtual aperture of the at least one radar sensor (2) is performed on the basis of position information (11) determined from the determined relative speed (6) and detected radar data (5) respectively corresponding to the determined position information (11), wherein the position information (11) is determined in such a way that the virtual aperture of the at least one radar sensor (2) is synthesized with equidistant nodes, **characterized in that** detected radar data (5) respectively temporally corresponding to the equidistant nodes is used for this purpose, wherein the detected radar data (5) temporally corresponding to the equidistant nodes is selected based on the determined position information (11) by temporal interpolation at respective receiving times ($t_i$).

2. Method according to Claim 1, wherein only static objects in the environment are selected and used to determine the relative speed (6).

3. Method according to Claim 2, wherein the relative speed (6) is determined on the basis of an object list (7) provided by the at least one radar sensor (2), wherein the object list (7) respectively comprises a radial speed (8), a measuring angle (9) and a radial distance (10) of static objects in the environment in relation to a phase centre of the at least one radar sensor (2).

4. Apparatus (1) for detecting an environment, comprising: at least one radar sensor (2) for detecting the environment, and an evaluation device (3), wherein the evaluation device (3) is designed in such a way as to synthesize a virtual aperture of the at least one radar sensor (2) for providing an image of the environment (20) on the basis of radar data (5) detected during a movement of the at least one radar sensor (2) and position information (11) of the at least one radar sensor (2), wherein the evaluation device (3) is further designed in such a way as to determine a relative speed (6) of the radar sensor (2) on the basis of the detected radar data (5) of the at least one radar sensor (2) and to carry out synthesizing of the virtual aperture of the at least one radar sensor (2) on the basis of position information (11) determined from the relative speed (6) and detected radar data (5) respectively corresponding to the determined position information (11), wherein the evaluation device (3) is further designed in such a way as to determine the position information (11) in such a way that the virtual aperture of the at least one radar sensor (2) is synthesized with equidistant nodes, **characterized in that** the evaluation device (3) is designed to select detected radar data (5) respectively temporally corresponding to the equidistant nodes for this purpose and to select the detected radar data (5) temporally corresponding to the equidistant nodes based on the determined position information (11) by temporal interpolation at respective receiving times ($t_i$).

5. Apparatus (1) according to Claim 4, wherein the evaluation device (3) is further designed in such a way as to select and to use only static objects in the environment to determine the relative speed (6).

6. Apparatus (1) according to Claim 5, wherein the evaluation device (3) is further designed in such a way as to determine the relative speed (6) on the basis of an object list (7) provided by the at least one radar sensor (2), wherein the object list (7) respectively comprises a radial speed (8), a measuring angle (9) and a radial distance (10) of static objects in the environment in relation to a phase centre of the at least one radar sensor (2).

7. Motor vehicle (50), comprising at least one apparatus (1) according to any of Claims 4 to 6.

**Revendications**

1. Procédé permettant de détecter un entourage, dans lequel un entourage est détecté au moyen d'au moins un capteur radar mobile (2), dans lequel une ouverture virtuelle dudit au moins un capteur radar (2) est synthétisée pour fournir une représentation d'entourage (20) sur la base de données radar (5) détectées et d'informations de position (11) dudit au moins un capteur radar (2),

dans lequel une vitesse relative (6) dudit au moins un capteur radar (2) est déterminée sur la base des données radar (5) détectées dudit au moins un capteur radar (2), dans lequel la synthèse de l'ouverture virtuelle dudit au moins un capteur radar (2) a lieu sur la base d'informations de position (11) déterminées à partir de la vitesse relative déterminée (6) et avec les données radar (5) détectées correspondant respectivement aux informations de position (11) déterminées, les informations de position (11) étant déterminées de telle sorte que l'ouverture virtuelle dudit au moins un capteur radar (2) est synthétisée avec des points nodaux équidistants, **caractérisé en ce qu'**à cet effet, respectivement des données radar (5) détectées, correspondant dans le temps aux points nodaux équidistants, sont utilisées, dans lequel les données radar (5) détectées, correspondant dans le temps aux points nodaux équidistants, sont sélectionnées en partant des informations de position (11) déterminées par interpolation temporelle sur des instants de réception ($t_i$) respectifs.

2. Procédé selon la revendication 1, dans lequel seuls des objets statiques dans l'entourage sont sélectionnés et utilisés pour déterminer la vitesse relative (6).

3. Procédé selon la revendication 2, dans lequel la vitesse relative (6) est déterminée sur la base d'une liste d'objets (7) fournie par ledit au moins un capteur radar (2), la liste d'objets (7) comprenant respectivement une vitesse radiale (8), un angle de mesure (9) et une distance radiale (10) d'objets statiques dans l'entourage par rapport à un centre de phase dudit au moins un capteur radar (2).

4. Dispositif (1) permettant de détecter un entourage, comprenant :

au moins un capteur radar (2) pour détecter l'entourage, et
un moyen d'évaluation (3), dans lequel, pour la fourniture d'une représentation d'entourage (20), le moyen d'évaluation (3) est réalisé de façon à synthétiser une ouverture virtuelle dudit au moins un capteur radar (2) sur la base de données radar (5) détectées pendant un mouvement dudit au moins un capteur radar (2) et d'informations de position (11) dudit au moins un capteur radar (2),
dans lequel le moyen d'évaluation (3) est en outre réalisé de façon à déterminer une vitesse relative (6) du capteur radar (2) sur la base des données radar (5) détectées dudit au moins un capteur radar (2), et pour effectuer la synthèse de l'ouverture virtuelle dudit au moins un capteur radar (2) sur la base d'informations de position (11) déterminées à partir de la vitesse relative (6) et avec des données radar (5) détectées, correspondant respectivement aux informations de position (11) déterminées,
dans lequel le moyen d'évaluation (3) est en outre réalisé de façon à déterminer les informations de position (11) de telle sorte que l'ouverture virtuelle dudit au moins un capteur radar (2) est synthétisée avec des points nodaux équidistants,
**caractérisé en ce que** le moyen d'évaluation (3) est réalisé pour sélectionner à cet effet des données radar (5) détectées, correspondant dans le temps aux points nodaux équidistants, et pour sélectionner les données radar (5) détectées, correspondant dans le temps aux points nodaux équidistants, en partant des informations de position (11) déterminées par interpolation dans le temps sur des instants de réception ($t_i$) respectifs.

5. Dispositif (1) selon la revendication 4, dans lequel le moyen d'évaluation (3) est en outre réalisé de façon à sélectionner et à utiliser uniquement des objets statiques dans l'entourage pour déterminer la vitesse relative (6).

6. Dispositif (1) selon la revendication 5, dans lequel le moyen d'évaluation (3) est en outre réalisé de façon à déterminer la vitesse relative (6) sur la base d'une liste d'objets (7) fournie par ledit au moins un capteur radar (2), la liste d'objets (7) comprenant respectivement une vitesse radiale (8), un angle de mesure (9) et une distance radiale (10) d'objets statiques dans l'entourage par rapport à un centre de phase dudit au moins un capteur radar (2).

7. Véhicule automobile (50), comprenant au moins un dispositif (1) selon l'une quelconque des revendications 4 à 6.

FIG. 1

FIG. 2

FIG. 3

FIG. 4

FIG. 5

FIG.6

FIG.7

FIG.8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102016102002 A1
- US 20190072668 A1
- US 20100321235 A1
- US 20160349363 A1
- DE 102010048896 A1

**In der Beschreibung aufgeführte Nicht-Patentliteratur**

- **GISDER, THOMAS et al.** Synthetic aperture radar towards automotive applications. *20th International Radar Symposium IRS 2019,* 26. Juni 2019, ISBN 978-3-7369-9860-5